# EUROPÄISCHE PATENTSCHRIFT

(11) **EP 3 967 549 B1**
(45) Veröffentlichungstag und Bekanntmachung des Hinweises auf die Patenterteilung: **24.07.2024**
(21) Anmeldenummer: 21191877.6
(22) Anmeldetag: 18.08.2021
(51) Int. Cl.: B60N 2/815, B60N 2/818

(54) **LAGERVORRICHTUNG FÜR EINE KOPFSTÜTZE**
BEARING DEVICE FOR A HEADREST
DISPOSITIF PALIER POUR UN APPUI-TÊTE

(30) Priorität: 26.08.2020 DE 102020122353
(43) Veröffentlichungstag der Anmeldung: 16.03.2022
(73) Patentinhaber: GRAMMER AG, 92289 Ursensollen (DE)
(72) Erfinder: Eiletz, Christian, 90518 Altdorf (DE); Häberl, Thilo, 92637 Weiden (DE)
(74) Vertreter: Roche, von Westernhagen & Ehresmann

(56) Entgegenhaltungen:
- WO-A1-2011/088167

## Beschreibung

Die Erfindung betrifft eine Lagervorrichtung für eine Haltestange einer Kopfstütze. Die Lagervorrichtung umfasst eine Verriegelungsvorrichtung mit welcher die Haltestange in wenigstens einer Position lösbar verriegelbar ist.

Ein solches Lager ist bekannt aus offenkundiger Vorbenutzung. Das Lager umfasst eine Führungshülse, die an der Rückenlehne eines Fahrzeugsitzes befestigbar ist. An der Führungshülse ist ein Schieber bewegbar geführt. An dem Schieber, ist ein Riegel gehalten, welcher mit wenigstens einer Aussparung der Haltestange zusammenwirkt. Der Riegel ist von einer Feder in Eingriff mit der Aussparung belastet. Durch Betätigen des Schiebers kann der Riegel aus der Riegelposition in eine Löseposition bewegt werden, in welcher die Tragstange frei in die Richtungen z1 und z2 relativ zu der Führungshülse bewegbar ist.

Die WO 2011/088167 A1 beschreibt eine Sitzvorrichtung mit einer Rückenlehne umfassend Seitenteile sowie eine Traverse, welche eine erste und eine zweite Öffnung jeweils zur Aufnahme von Haltestangen einer Kopfstütze umfasst. Die Traverse weist außerdem Mittel zur Ver- und Entriegelung der Haltestange auf. In unterschiedlichen Ausführungsbeispielen sind mehrere Ausführungen dieser Mittel beschrieben.

Es war Aufgabe der Erfindung eine Lagervorrichtung zu schaffen, welche die Handhabung bei der Montage der Haltestange in einer Arretierstellung sowie die Demontage aus der Arretierstellung heraus erleichtert.

Die Aufgabe wurde gelöst durch eine Lagervorrichtung mit den Merkmalen des Anspruchs 1.

Die Lagervorrichtung ist zur Lagerung einer Kopfstütze mit wenigstens einer Haltestange vorgesehen. Die Haltestange ist Teil der Lagervorrichtung. Die Haltestange kann z.B. eine Einzelstange oder ein freies Ende eines Haltestangenbügels sein. Außerdem umfasst die Lagervorrichtung ein Führungsteil, mit welchem die Haltestange der Kopfstütze an einem Fahrzeugsitz lagerbar ist. Das Führungsteil ist an dem Fahrzeugsitz, insbesondere an einer Rückenlehne des Fahrzeugsitzes, befestigt. Das Führungsteil umfasst Lagerflächen, welche die Haltestange bei der Montage in dem Führungsteil in eine Arretierstellung und bei der Demontage führen und halten.

Die Lagervorrichtung umfasst eine Verriegelungsvorrichtung mittels welcher die Tragstange in einer Arretierstellung relativ zu dem Führungsteil lösbar festlegbar ist. Die Verriegelungsvorrichtung umfasst einen zwischen einer Riegelposition und einer Löseposition bewegbaren Riegel, welcher dem Führungsteil zugeordnet ist und wenigstens eine Aussparung, welche der Tragstange zugeordnet ist. In der Riegelposition ist der Riegel in Eingriff mit der Aussparung. Die Haltestange ist dann unbewegbar in der Arretierstellung gehalten. In der Löseposition sind Riegel und Aussparung außer Eingriff, so dass die Haltestange aus der Arretierstellung bewegbar ist.

Die Verriegelungsvorrichtung ist mit einer Betätigungsvorrichtung zwischen der Riegelposition und der Löseposition verstellbar. Die Betätigung erfolgt z.B. manuell oder motorisch. Z.B. ist der Riegel von einem Rückstellelement in die Riegelposition belastet. Durch Betätigung der Betätigungsvorrichtung wird dann z.B. der Riegel aus der Riegelposition in die Löseposition verstellt. Die Rückstellung erfolgt in diesem Fall durch Nachlassen der Kraft auf die Betätigung.

Die Betätigungsvorrichtung umfasst eine Kraftübertragungs-Verbindung in Form eines Bandes, z.B. eines flaschenzugartig geführten Bandes. Bei einer Verstellung der Betätigungsvorrichtung in die Löseposition ist der Riegel durch eine resultierende Betätigungskraft in die Löseposition verstellbar. Ein zweiter Kraftanteil bewegt z.B. über die Verbindung den Ausstoßer aus einer ersten Position in eine zweite Position, wobei der Ausstoßer die Haltestange aus der Arretierstellung in eine Entnahmestellung bewegt. Alternativ unterstützt der zweite Kraftanteil die Bewegung in die Entnahmeposition.

Die Lagervorrichtung umfasst z.B. einen Ausstoßer, welcher dazu vorgesehen ist, die Bewegung der Haltestange aus der Arretierstellung in eine Entnahmestellung vorzunehmen. Eine weitere resultierende Betätigungskraft wirkt z.B. auf den Ausstoßer und belastet diesen von einer ersten Position in einer zweite Position. Der Ausstoßer steht derart mit der Haltestange in Verbindung, dass die Haltestange in einer Arretierstellung angeordnet ist, wenn sich der Ausstoßer in der ersten Position befindet und in einer Entnahmeposition angeordnet ist, wenn sich der Ausstoßer in der zweiten Position befindet.

In der Arretierposition ist die Haltestange z.B. in einem Sitz des Führungsteils angeordnet. In der Entnahmeposition ist die Haltestange z.B. in Demontagerichtung aus dem Sitz herausbewegt.

Die Betätigungsvorrichtung umfasst ein Band, welches die Verbindung ausbildet. Das Band ist z.B. textiler, metallischer oder kunststofflicher Art oder von einem Verbundwerkstoff gebildet. Das Band sollte Zugkräfte in ausreichendem Maße übertragen können.

Das Band umfasst z.B. einen Betätigungsbereich, welcher mit einem Widerlager des Riegels zusammenwirkt, derart, dass bei einer Zugkraft auf das Band eine Kraft auf das Widerlager ausgeübt wird, welche den Riegel in die Löseposition verstellt. Der Betätigungsbereich ist z.B. zwischen den Endbereichen des Bandes angeordnet.

Das Band wird z.B. an dem Widerlager von einer ersten Erstreckungs-Richtung in eine zweite Erstreckungs-Richtung umgelenkt. An der Kontaktstelle eines Betätigungsbereichs des Bandes mit dem Widerlager wirkt eine resultierende Kraft der Betätigungskraft auf den Riegel, wodurch der Riegel aus der Riegelposition in die Löseposition bewegt wird. Z.B. ist das Band lose um das Widerlager des Riegels geführt und bewegt sich relativ zu dem Widerlager. Ein der Betätigung abgewandter Endbereich des Bandes ist z.B. fest an dem Führungsteil befestigt oder alternativ wird die an diesem Endbereich resultierende Kraft zur Bewegung eines weiteren Teils, z.B. eines Ausstoßers genutzt.

Der Riegel steht z.B. in der Riegelposition mit einem ersten Anschlag und in der Löseposition mit einem zweiten Anschlag des Führungsteils in Kontakt. Die Anschläge stellen eine Bewegungsbegrenzung für den Riegel dar. Darüber hinaus kann mittels der Anschläge eine Kraft von dem Riegel oder einem Riegelhalter auf das Führungsteil übertragen werden.

Wenn z.B. der Riegelhalter das Widerlager ausbildet, kann in der Riegelposition eine aus der Betätigungskraft resultierende Kraft den Riegel in die Löseposition bewegen und eine weitere resultierende Kraft den Ausstoßer belasten. Bei einer Zugkraft auf das Band wird dann der Riegel aufgrund der resultierenden Kraft zunächst in die Löseposition bewegt, in welcher der Riegel oder ein Riegelhalter mit dem zweiten Anschlag in Kontakt steht. Nach Entriegelung kann eine weitere resultierende Kraft von dem Führungsteil aufgenommen werden oder diese Kraft belastet alternativ den Ausstoßer in Richtung der zweiten Position und unterstützt so die Bewegung der Haltestange in die Entnahmeposition.

Der Betätigungsbereich ist z.B. zwischen einem ersten Endbereich und einem zweiten Endbereich des Bandes ausgebildet.

Ein Endbereich des Bandes ist z.B. zur motorischen oder manuellen Betätigung vorgesehen. Bei einer manuellen Betätigung kann das Band z.B. für einen vorteilhaften Griff mit einer Schlaufe versehen sein.

Der Riegel ist z.B. einem zwischen der Riegelposition und der Löseposition bewegbar geführten Riegelhalter zugeordnet. Der Riegelhalter kann z.B. einen Riegelbereich aufweisen oder alternativ ist ein zusätzliches Riegelelement, wie z.B. ein Riegeldraht, an dem Riegelhalter befestigt. Dem Riegelhalter sind z.B. erste Führungsmittel zugeordnet, die mit zweiten Führungsmitteln des Führungsteils zusammenwirken, um den Riegelhalter derart bewegbar zu führen, dass der Riegel zwischen der Riegelposition und der Löseposition bewegbar ist. Außerdem kann z.B. das Widerlager für das Band an dem Riegelhalter ausgebildet sein.

Der Riegelhalter ist z.B. in einer Aussparung des Führungsteils geführt. Z.B. sind an dem Führungsteil Führungsmittel, z.B. in Form von Gleitflächen, ausgebildet, die mit korrespondierenden Gleitflächen des Riegelhalters zusammenwirken, um den Riegelhalter mit dem Riegel zwischen der Riegelposition und der Löseposition bewegbar zu führen.

Der Riegel ist z.B. translatorisch oder rotatorisch zwischen der Riegelposition und der Löseposition bewegbar gelagert.

Gemäß einer Ausgestaltung ist der Riegel von einer Feder in die Riegelposition belastet. Auf diese Weise wird bei Entlastung der Betätigungsvorrichtung der Riegel in Eingriff mit einer Aussparung gehalten. Das gewährleistet die Sicherheit der Lagervorrichtung.

Der Ausstoßer ist z.B. translatorisch oder rotatorisch bewegbar gelagert. Bei translatorischer Bewegbarkeit ist der Ausstoßer z.B. parallel zu der Demontagerichtung der Haltestange bewegbar. Bei rotatorischer Bewegbarkeit ist z.B. die Rotationsbewegung einer Betätigungsfläche der Haltestange derart, dass die Haltestange zumindest über einen Teil der Bewegung von der Arretierstellung in die Entnahmestellung von dem Ausstoßer bewegbar ist.

Der Ausstoßer ist z.B. zusätzlich von einer Feder in Ausstoßrichtung belastet. Nach Entriegelung der Haltestange durch eine Bewegung der Verriegelungsvorrichtung von der Riegelposition in die Löseposition wird der Ausstoßer zugleich von der Federkraft und von der über die Verbindung auf den Ausstoßer ausgeübten Kraft in Demontagerichtung belastet. Bei der Bewegung des Ausstoßers von der ersten Position in die zweite Position entspannt sich die Feder, während die Haltestange in Demontagerichtung in die Entnahmeposition bewegt wird. Wird die Haltestange in Montagerichtung in die Arretierstellung bewegt, wird die Feder gespannt.

Die Haltestange weist z.B. endseitig eine Konusform auf. Das Merkmal verursacht bei der Bewegung der Haltestange in Montagerichtung eine Bewegung des Riegels aus der Bewegungsbahn der Tragstange, so dass der Riegel automatisch in die Aussparung einrasten kann, sobald die Haltestange die Arretierstellung erreicht hat.

Die Konusform der Haltestange ist z.B. einem Kunststoffteil zugeordnet, welches mit der Haltestange verbunden ist. Die Haltestange, die z.B. als Haltestangenrohr ausgebildet ist, kann dann in üblicher Weise gefertigt werden, während das Kunststoffteil mit der Konusform durch Kunststoffspritzguss erzeugt wird.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug auf ein Ausführungsbeispiel beschrieben, dargestellt oder offenbart sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst, solange sie von den Ansprüchen abgedeckt sind.

Es zeigen:
Fig. 1 eine perspektivische Darstellung der Lagervorrichtung, wobei sich die Haltestange in der Arretierposition und die Verriegelungsvorrichtung in der Riegelposition befinden,
Fig. 2 eine Seitenansicht der Lagervorrichtung gemäß Fig. 1,
Fig. 3 eine Längsschnittdarstellung der Lagervorrichtung gemäß Fig. 2,
Fig. 4 eine Schnittdarstellung gemäß Schnittlinie A - A in Fig. 2,
Fig. 5 eine perspektivische Darstellung der Lagervorrichtung, wobei sich die Haltestange in der Arretierposition und die Verriegelungsvorrichtung in der Löseposition befinden,
Fig. 6 eine Seitenansicht der Lagervorrichtung gemäß Fig. 5,
Fig. 7 eine Längsschnittdarstellung der Lagervorrichtung gemäß Fig. 6,
Fig. 8 eine perspektivische Darstellung der Lagervorrichtung, wobei sich die Haltestange in der Entnahmeposition und die Verriegelungsvorrichtung in der Löseposition befinden,
Fig. 9 eine Seitenansicht der Lagervorrichtung gemäß Fig. 8, und
Fig. 10 eine Längsschnittdarstellung der Lagervorrichtung gemäß Fig. 9.

Die Lagervorrichtung insgesamt ist in den Fig. mit dem Bezugszeichen 10 bezeichnet.

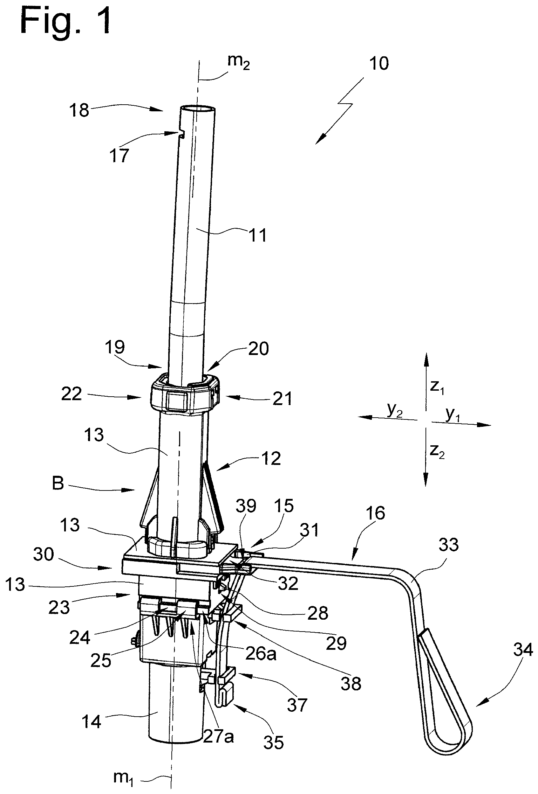

Die Lagervorrichtung 10 umfasst gemäß Fig. 1 eine Haltestange 11, ein Führungsteil 12, und eine Verriegelungsvorrichtung 15, die mittels einer Betätigungsvorrichtung 16 für die Verriegelungsvorrichtung 15 betätigbar ist.

Die Haltestange 11 ist im vorliegenden Ausführungsbeispiel eine Einzelhaltestange. Ein nicht dargestelltes Kopfanlageteil ist z.B. an zwei Lagervorrichtungen 10 gelagert. Die Verriegelungsvorrichtung 15 kann lediglich bei einer der Lagervorrichtungen 10 oder alternativ bei beiden Lagervorrichtungen 10 vorgesehen sein.

Die Haltestange 11 ist an einem oberen Endbereich 18 mit einer Befestigungsstruktur 17 versehen, mit welcher das Kopfanlageteil an der Haltestange befestigbar ist. In diesem Ausführungsbeispiel ist die Befestigungsstruktur 17 als Aussparung ausgebildet, wobei aber auch andere Befestigungsstrukturen einsetzbar sind.

Ein unterer Endbereich 19 der Haltestange 11 ist in einer Führungsaussparung 20 des Führungsteils 12 aufgenommen. Das Führungsteil 12 ist in diesem Ausführungsbeispiel zweiteilig ausgebildet und weist ein Führungsoberteil 13 sowie ein Führungsunterteil 14 auf. Die Zweiteiligkeit erleichtert die Montage des Führungsteils 12. An einem oberen Endbereich 21 weist das Führungsoberteil 13 eine ringförmige Verdickung 22 auf, welche der Aufnahme eines Gleitlagers dient.

An einem unteren Endbereich 23 des Führungsoberteils 13 sind erste Führungsmittel 24 ausgebildet, die mit zweiten Führungsmitteln 25 des Führungsunterteils 14 zusammenwirken, um das Führungsoberteil 13 in einen Rastsitz des Führungsunterteils zu bewegen und diese Teile auf diese Weise miteinander zu verbinden.

Die ersten Führungsmittel 24 sind in dem Ausführungsbeispiel von Stegen 26a und 26b gebildet, wobei der Steg 26a in Nuten 27a und und der Steg 26b in Nuten 27b eingreift. Wenn der Rastsitz gemäß Fig. 1 erreicht ist, verrastet eine Hakenstruktur 28 des Führungsunterteils 14 mit einer Aussparung 29 des Führungsoberteils 13. Im verrasteten Zustand sind das Führungsoberteil 13 und das Führungsunterteil 14 nicht zueinander relativbewegbar.

An dem Führungsoberteil 13 ist eine Lagerstruktur 30 ausgebildet, welche der Gleitführung eines Riegelhalters 31 dient. Die Lagerstruktur 30 umfasst eine Aussparung 32, an deren Innenflächen der Riegelhalter 31 derart geführt ist, dass er lediglich Freiheitsgrade in Richtung y1 und y2 aufweist. Der Riegelhalter ist im vorliegenden Beispiel in die Richtungen y1 und y2 zwischen einer Riegelposition und einer Löseposition bewegbar, was weiter unten genauer erläutert wird. Die Bewegung des Riegelhalters 31 verläuft etwa rechtwinklig zu einer Längsmittelachse m1 der Führungsaussparung 20. In dem unteren Endbereich 19 der Haltestange 11 verläuft eine Längsmittelachse m2 der Haltestange 11 etwa parallel zu der Längsmittelachse m1, wenn sich die Haltestange in der Riegelstellung oder der Entnahmestellung befindet.

Die Verriegelungsvorrichtung 15 umfasst die Betätigungsvorrichtung 16 mit welcher dier Verriegelungsvorrichtung 15 zwischen der Riegelposition und der Löseposition verstellbar ist. In dem vorliegenden Beispiel wird die Verriegelungsvorrichtung 15 manuell an einer Betätigung 63 betätigt. Alternativ könnte aber ebenso eine motorische Betätigung vorgesehen sein.

Die Betätigungsvorrichtung 16 umfasst ein Band 33, wobei das Band 33 an einem Endbereich 34 manuell betätigt wird. An dem Endbereich 34 ist in dem vorliegenden Beispiel eine Schlaufe ausgebildet, an welcher eine Zugkraft F1 auf das Band 33 aufgebracht werden kann. Alternativ zu der Schlaufe könnte auch eine andere Betätigung 63 vorgesehen sein, wie z.B. ein Griff oder z.B. alternativ oder zusätzlich eine Verbindung mit einem motorischen Antrieb.

Ein Endbereich 35 des Bandes 33 ist mittels einer Halterung 37 an einem Ausstoßer 36 befestigt, auf den weiter unten eingegangen wird.

Das Band 33 verläuft von der Halterung 37 etwa parallel zu der Längsmittelachse m1 etwa in Richtung der z-Achse, wobei es von einer Führung 38 des Führungsteils 12 außen an dem Führungsteil 12 geführt wird. Das Band 33 liegt an einer Widerlagerfläche 57 eines Widerlagers des Riegelhalters 31 an, und wird an der Widerlagerfläche, die in Fig. 1 nicht erkennbar ist, in eine Richtung parallel zu der Achse y etwa rechtwinklig umgelenkt. Die Widerlagerfläche 57 bildet ein Gleitlager, an welchem das Band 33 vorbeigleitet, wenn es sich relativ zu dem Riegelhalter 31 bewegt. Alternativ könnte aber auch eine Rolle vorgesehen sein, über welche das Band 33 gleitet. Im vorliegenden Ausführungsbeispiel ist die Widerlagerfläche 57 von der Laibung einer einer Aussparung 39 des Riegelhalters 31 gebildet.

Die Widerlagerfläche stellt z.B. eine flaschenzugartige Führung dar, so dass an der Widerlagerfläche eine Kraft F2 aufgenommen wird, wenn an dem Endbereich 34 eine Kraft F1 auf das Band wirkt. Die Kraft F2 an der Widerlagerfläche 57 ist z.B. doppelt so groß wie eine Kraft F1, die an der Halterung 37 und auch an dem Endbereich 34 des Bandes anliegt. Das Band kann sich relativ zu der Widerlagerfläche 57 bewegen.

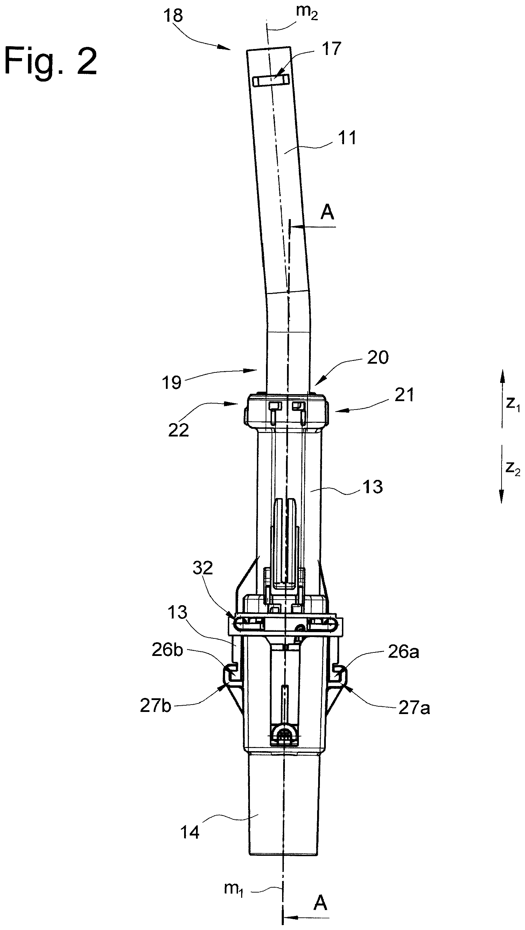

Fig. 2 ist eine Seitenansicht der Vorrichtung etwa gemäß Ansichtspfeil B in Fig. 1.

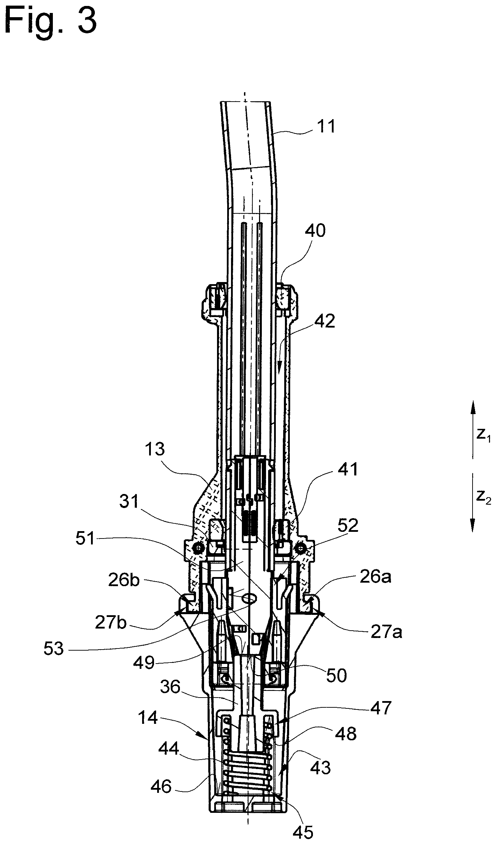

In der Schnittdarstellung gemäß Fig. 3 ist erkennbar, dass das Führungsteil 12 Gleitlager 40 und 41 aufweist, die voneinander beabstandet an dem Führungsteil gehalten sind und derart in einen Führungsraum 42 des Führungsteils 12 radial hineinragen, dass sie die Haltestange 11 bei der Montage in Richtung z1 und der Demontage in Richtung z2 gleitführen können.

In einem Aufnahmeraum 43 des Führungsteils 12 ist eine Feder 44 aufgenommen, welche sich mit einem Federende 45 an einer Bodenfläche 46 des Führungsteils abstützt. Ein Federende 47 steht mit einer Kontaktfläche 48 des Ausstoßers 36 in Kontakt, derart, dass die Feder 44 den Ausstoßer 36 in Richtung z1 belasten kann, wenn sie unter Spannung steht. Der Ausstoßer 36 ist derart in dem Führungsteil 12 geführt, dass er sich lediglich in die Richtungen z1 und z2 bewegen kann. Gemäß Fig. 3 ist die Feder 44 gespannt. Der Ausstoßer 44 weist eine Betätigungsfläche 49 auf, die mit einer Gegenfläche 50 eines Ansatzteils 51 in Kontakt steht, welches fest mit dem unteren Endbereich 19 der Haltestange 11 verbunden ist.

Das Ansatzteil 51 umfasst eine Schrägfläche 59, die derart ausgebildet ist, dass beim Einstecken der Haltestange 11 in Richtung z1 in die Führungsaussparung 20 des Führungsteils 12 eine Kraft auf den in der Bewegungsbahn befindlichen Riegel in Richtung y1 ausgeübt werden kann, so dass dieser sich in Richtung y1 aus der Bewegungsbahn herausbewegt. Im vorliegenden Beispiel ist an dem Ansatzteil 51 eine konusformige umlaufende Schräge ausgebildet. Wie in Fig. 3 zu erkennen ist, bildet das Ansatzteil 51 eine Verlängerung der Haltestange 11.

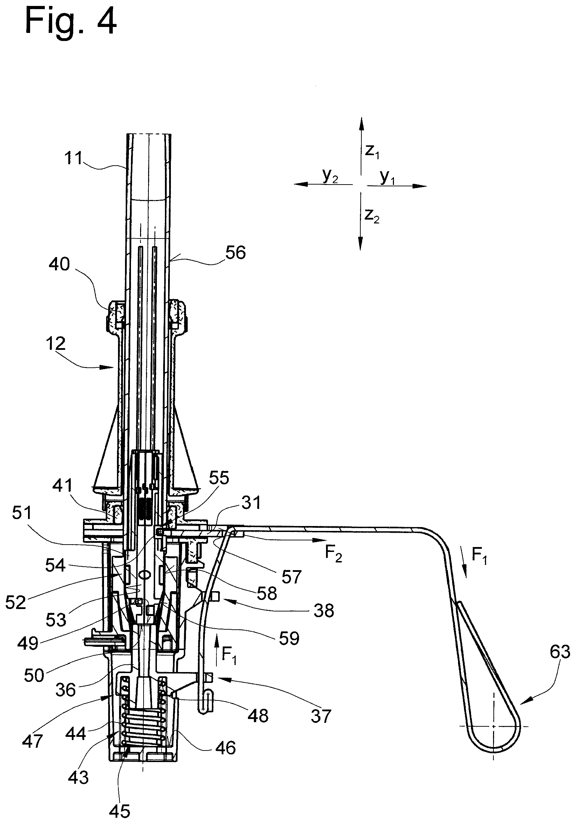

In den Fig. 3 und 4 ist zu sehen, dass in der dargestellten Arretierposition der Haltestange 11 das Ansatzteil 51 in einem Sitz 52 des Führungsteils 12 angeordnet ist. Der Sitz 52 wird von einer Innenfläche 53 des Führungsteils 12, z.B. des Führungsunterteils 14 ausgebildet.

Gemäß Fig. 4 ist an dem Riegelhalter 31 ein separater Riegel 54 gehalten. Der Riegel 54 ist z.B. von einem Draht gebildet, der an dem Riegel 54 befestigt, z.B. im Kunststoffspritzgießverfahren eingespritzt ist. Alternativ kann der Riegel aber auch von einer Fläche des Riegelhalters 31 gebildet sein, d.h. kein gesondertes Teil sein. Der Riegel 54 steht gemäß Fig. 4 in Eingriff mit einer Aussparung 55 der Haltestange 11. Die Aussparung 55 befindet sich an der Mantelfläche 56 der Haltestange 11.

Der Riegel 54 greift etwa radial zu der Längsmittelachse m1 in die Aussparung 55 ein, derart, dass er eine Bewegung der Haltestange 11 in die Richtungen z1 und z2 verhindert. Auch in andere Raumrichtungen kann sich die Haltestange 11 in der Arretierposition nicht bewegen. Die dabei von dem Riegel 54 aufgenommenen Kräfte werden auf den Riegelhalter 31 übertragen und von diesem weiter auf das Führungsteil 12 übertragen.

Die Funktion der Lagervorrichtung 10 wird nachstehend erläutert. Wenn sich die Haltestange 11 in der Arretierstellung in dem Führungsteil befindet und der Riegel 54 in der Riegelposition der Verriegelungsvorrichtung 15 in Eingriff mit der Aussparung 55 der Haltestange 11 ist, wird die Kraft der Feder 44 über den Ausstoßer 36 auf die Haltestange 11 übertragen und über den Riegelhalter 31 an die das Führungsteil 12 abgegeben.

Eine zusätzlich auf das Band 33 ausgeübte Kraft F1 wird auf den Ausstoßer 36 übertragen, so dass dieser von einer zusätzlich zu der Federkraft einwirkenden Kraft F1 in Richtung z1 belastet wird. Solange der Riegel 54 in Eingriff mit der Aussparung 55 ist, wird auch diese Kraft von dem Führungsteil 12 aufgenommen.

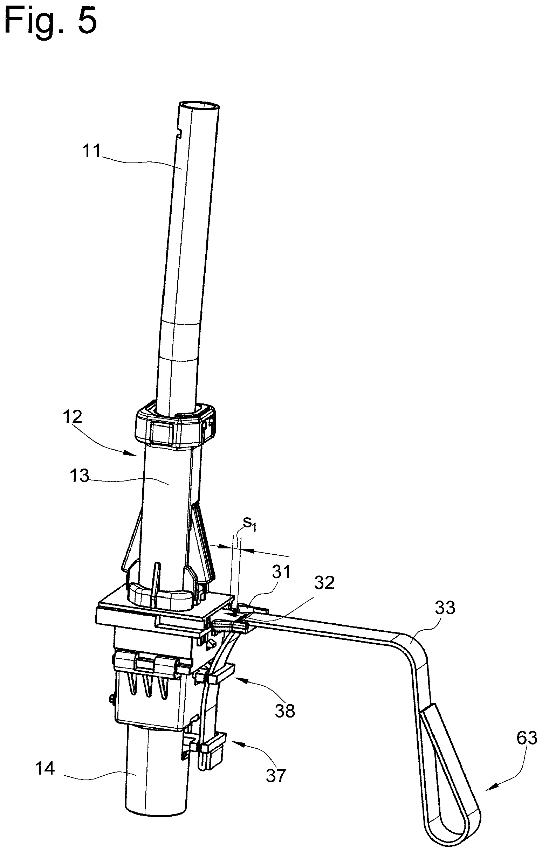

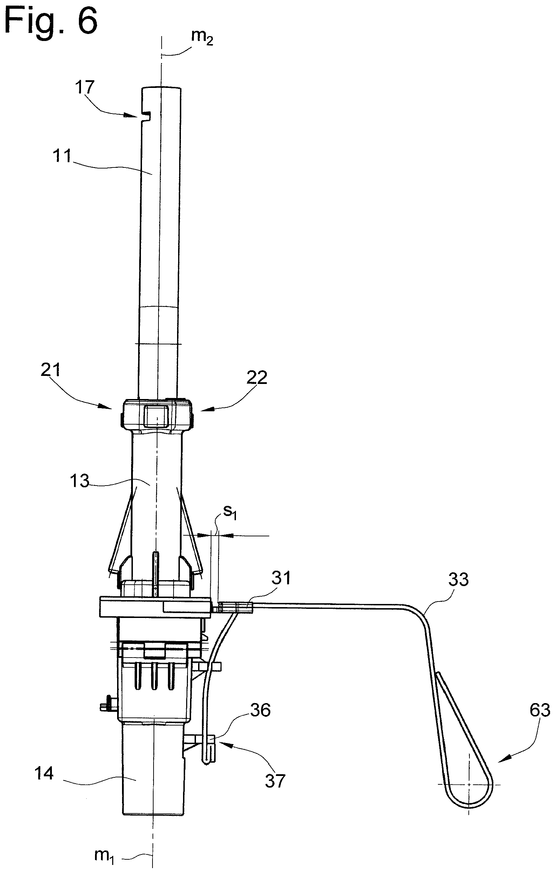

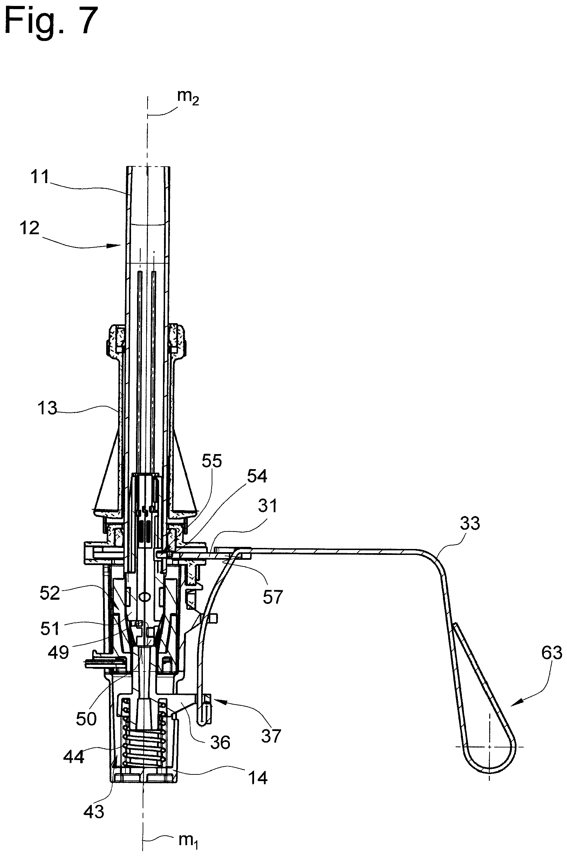

An der in Fig. 4 erkennbaren Widerlagerfläche 57 des Riegelhalters 31 wirkt bei einer Betätigungskraft F1 auf das Band 33 eine Kraft F2 in Richtung y1. Die Kraft F2 bewirkt eine Bewegung des Riegelhalters 31 in Richtung y1, wobei sich der Riegel 54 außer Eingriff mit der Aussparung 55 bewegt. Die Verriegelungsvorrichtung ist damit von der Riegelposition in die Löseposition verstellt worden (siehe die Fig. 5 bis 7). Die Flächen 61 und 62 sind um eine Strecke s1 voneinander beabstandet.

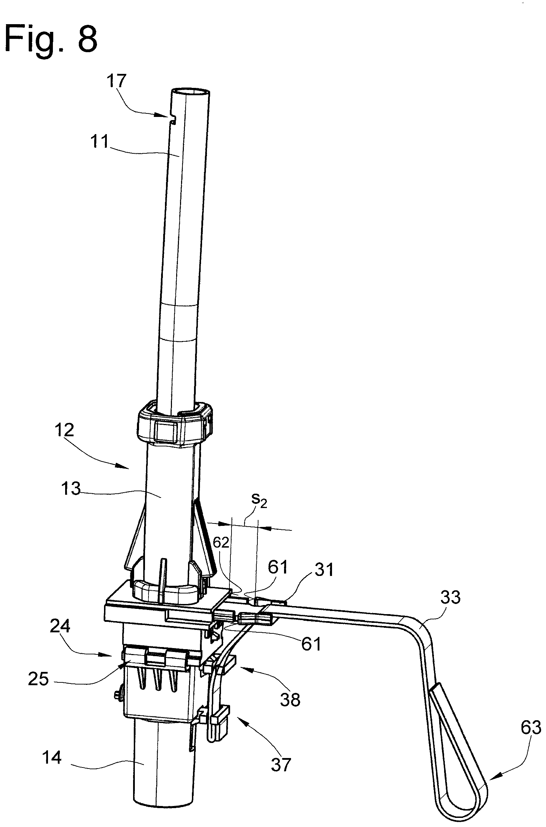

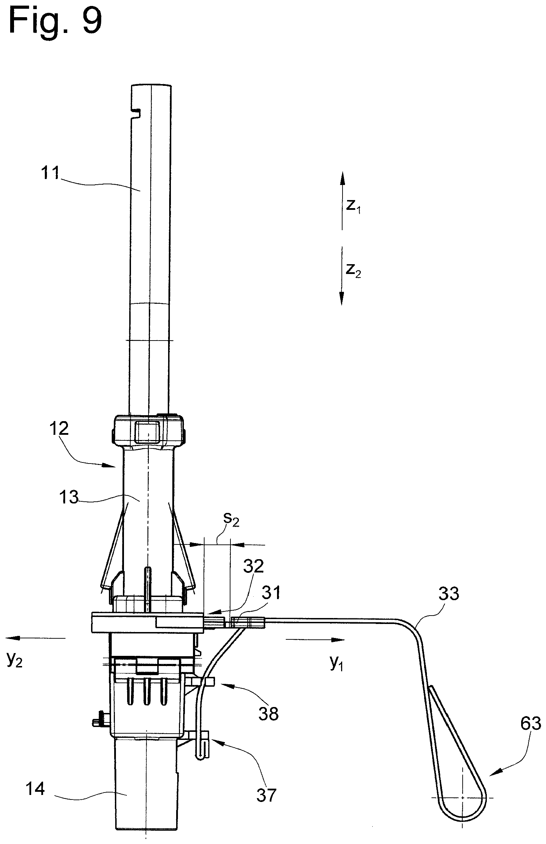

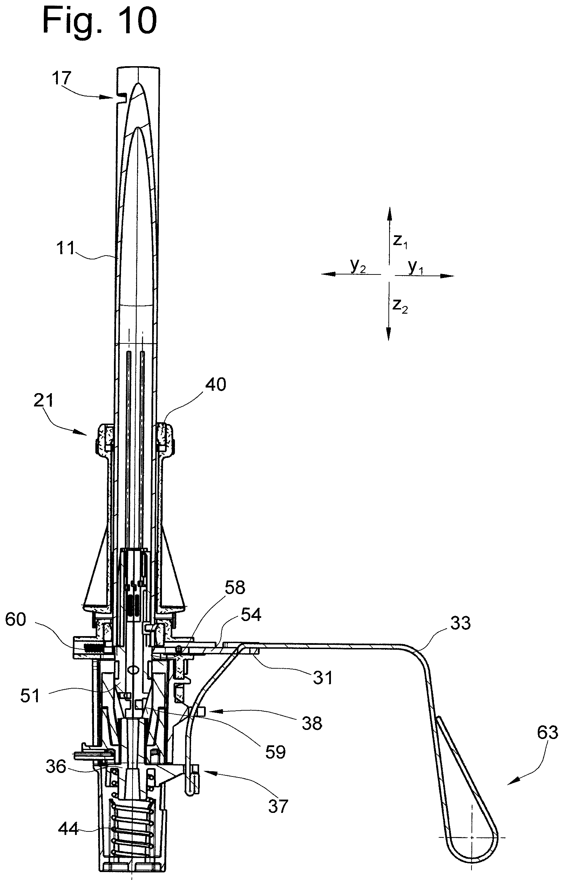

Da die Haltestange 11 nun nicht mehr in der Arretierposition verriegelt ist, kann diese unter Einwirkung der Federkraft sowie der Kraft F1 von dem Ausstoßer 36 in eine Entnahmeposition bewegt werden, die in den Fig. 8 bis 10 dargestellt ist. Der Ausstoßer 36 bewegt sich dabei von einer ersten Position gemäß der Fig. 3 und 4 in eine zweite Position gemäß Fig. 10. Die Flächen 61 und 62 sind um die Strecke s2 voneinander beabstandet.

In der Entnahmeposition kann bei nachlassender Kraft auf das Band 33 die Haltestange 11 nicht wiederverriegelt werden. Auch wenn sich der Riegelhalter 31 in Richtung y2 bewegt, schlägt der Riegel 54 an eine Außenfläche 58 des Ansatzteils 51 der Haltestange 11 an, da sich der Riegel 54 und die Aussparung 55 in unterschiedlichen Positionen bezüglich der Z-Achse befinden.

Aus der Entnahmeposition kann die Haltestange 11 durch eine Bewegung in Richtung z1 aus dem Führungsraum 42 entfernt werden. Der von Federn 60 (siehe Fig. 10) in Richtung y2 belastete Riegelhalter 31 wird dann in Richtung y2 bewegt, bis Halteflächen 61 des Riegelhalters 31 an einer Gegenfläche 62 des Führungsteils 12 anliegen.

Die Montage der Haltestange 11 erfolgt, indem die Haltestange 11 in Montagerichtung z2 in den Führungsraum 42 bewegt wird, bis die Schrägfläche 59 des Ansatzteils 51 mit dem Riegel 54 oder dem Riegelhalter 31 in Kontakt gerät. Bei weiterer Bewegung in Richtung z2 wird eine Kraft in Richtung y1 auf den Riegelhalter 31 ausgeübt, welche den Riegelhalter 31 in Richtung y2 aus der Bewegungsbahn der Haltestange 11 bewegt. Die Haltestange 11 kann daher weiter in Richtung z2 bewegt werden, bis das Ansatzteil 51 in dem Sitz 52 angeordnet ist. Die Haltestange 11 befindet sich dann wieder in der Arretierposition. In der Arretierposition befinden sich der Riegel 54 und die Aussparung 55 auf dem gleichen Niveau bezüglich der Z-Achse, so dass sich der von Federn 60 in Richtung y2 belastete Riegelhalter 31 in Richtung y2 bewegen kann, wobei sich der Riegel 54 in Eingriff mit der Aussparung 55 bewegt.

## Patentansprüche

1. Lagervorrichtung (10) für eine Kopfstütze umfassend ein Führungsteil (12) mit welchem die Haltestange (11) der Kopfstütze an einem Fahrzeugsitz lagerbar ist und mittels einer Verriegelungsvorrichtung (15) in einer Arretierstellung relativ zu dem Führungsteil (12) lösbar festlegbar ist, wobei die Verriegelungsvorrichtung (15) einen zwischen einer Riegelposition und einer Löseposition bewegbaren Riegel (54) umfasst, welcher dem Führungsteil (12) zugeordnet ist und wenigstens eine Aussparung (55) umfasst, welche der Haltestange (11) zugeordnet ist, **dadurch gekennzeichnet, dass** eine Betätigungsvorrichtung (16) der Verriegelungsvorrichtung (15) eine Kraftübertragungs-Verbindung in Form eines Bandes (33), insbesondere eines flaschenzugartig geführten Bandes (33), umfasst, derart, dass bei einer Verstellung der Betätigungsvorrichtung der Riegel (54) durch eine resultierende Betätigungskraft in die Löseposition verstellbar ist.

2. Lagervorrichtung nach einem der vorangehenden Ansprüche, **dadurch gekennzeichnet, dass** dass Band (33) mit einem an dem Führungsteil (12) geführten Ausstoßer (36) für die Haltestange (11) in Verbindung steht, derart, dass eine weitere resultierende Betätigungskraft auf den Ausstoßer (36) wirkt und diesen von einer ersten Position in eine zweite Position belastet.

3. Lagervorrichtung nach einem der vorangehenden Ansprüche, **dadurch gekennzeichnet, dass** das Band (33) einen Betätigungsbereich umfasst, welcher mit einem Widerlager des Riegels (54) zusammenwirkt, derart, dass bei einer Zugkraft auf das Band (33) eine Kraft auf das Widerlager ausgeübt wird, welche den Riegel (54) in die Löseposition verstellt.

4. Lagervorrichtung nach einem der vorangehenden Ansprüche, **dadurch gekennzeichnet, dass** in der Riegelposition das Band (33) an dem Widerlager von einer ersten Erstreckungs-Richtung (y1, y2) in eine zweite Erstreckungs-Richtung (z1, z2) umgelenkt wird.

5. Lagervorrichtung nach einem der vorangehenden Ansprüche, **dadurch gekennzeichnet, dass** der Betätigungsbereich zwischen einem ersten Endbereich (34) und einem zweiten Endbereich (35) des Bandes (33) ausgebildet ist.

6. Lagervorrichtung nach einem der vorangehenden Ansprüche, **dadurch gekennzeichnet, dass** ein Endbereich (34) des Bandes (33) eine motorische oder manuelle Betätigung (63) bildet und der andere Endbereich (35) eine Halterung an dem Ausstoßer (36) bildet.

7. Lagervorrichtung nach einem der vorangehenden Ansprüche, **dadurch gekennzeichnet, dass** der Riegel (54) einem zwischen der Riegelposition und der Löseposition bewegbar geführten Riegelhalter (31) zugeordnet ist.

8. Lagervorrichtung nach Anspruch 7, **dadurch gekennzeichnet, dass** der Riegelhalter (31) in einer Aussparung (32) des Führungsteils (12) geführt ist.

9. Lagervorrichtung nach einem der vorangehenden Ansprüche, **dadurch gekennzeichnet, dass** der Riegel (54) in der Riegelposition mit einem ersten Anschlag und in der Löseposition mit einem zweiten Anschlag in Kontakt steht.

10. Lagervorrichtung nach einem der vorangehenden Ansprüche, **dadurch gekennzeichnet, dass** der Riegel (54) translatorisch verschiebbar oder drehbar gelagert ist.

11. Lagervorrichtung nach einem der vorangehenden Ansprüche, **dadurch gekennzeichnet, dass** der Riegel (54) von wenigstens einer Feder (60) in die Riegelposition belastet ist.

12. Lagervorrichtung nach einem der vorangehenden Ansprüche, **dadurch gekennzeichnet, dass** der Ausstoßer (36) translatorisch oder rotatorisch bewegbar gelagert ist.

13. Lagervorrichtung nach einem der vorangehenden Ansprüche, **dadurch gekennzeichnet, dass** der Ausstoßer (36) von wenigstens einer Feder (44) in Ausstoßrichtung belastet ist.

14. Lagervorrichtung nach einem der vorangehenden Ansprüche, **dadurch gekennzeichnet, dass** die Haltestange (11) endseitig eine Konusstruktur aufweist.

15. Lagervorrichtung nach Anspruch 14, **dadurch gekennzeichnet, dass** die Konusstruktur einem Ansatzteil (51), welches insbesondere als Kunststoffteil ausgebildet ist, zugeordnet ist und welches mit der Haltestange (11) verbunden ist.

## Claims

1. Bearing device (1) for a headrest, comprising a guide part (12) with which the retaining bar (11) of the headrest can be positioned on a vehicle seat and, by means of a locking device (15), can be releasably fixed in a locked position relative to the guide part (12), wherein the locking device (15) comprises a bolt (54) that can be moved between a bolted position and a released position, said bolt being assigned to the guide part (12) and comprising at least one recess (55) which is assigned to the retaining bar (11), **characterised in that** an actuator (16) of the locking device (5) comprises a force transmission connection in the form of a band (33), in particular a pulley-guided band (33), in such a way that, when the actuator is adjusted, the bolt (54) can be adjusted into the released position by a resultant actuating force.

2. Bearing device according to one of the preceding claims, **characterised in that** the band (33) is connected to an ejector (36) for the retaining bar (11), which is guided on the guide part (12), in such a way that a further resultant actuating force acts on the ejector (36) and stresses this from a first position into a second position.

3. Bearing device according to one of the preceding claims, **characterised in that** the band (33) comprises an actuation region, which interacts with an abutment of the bolt (54) in such a way that, when the band (33) is pulled, a force is exerted on the abutment, said force adjusting the bolt (54) into the released position.

4. Bearing device according to one of the preceding claims, **characterised in that**, in the bolted position, the band (33) is redirected to the abutment, from a first extension direction (y1, y2) to a second extension direction (z1, z2).

5. Bearing device according to one of the preceding claims, **characterised in that** the actuation region is formed between a first end region (34) and a second end region (35) of the band (33).

6. Bearing device according to one of the preceding claims, **characterised in that** an end region (34) of the band (33) forms a motorised or manual actuation (63) and the other end region (35) forms a bracket on the ejector (36).

7. Bearing device according to one of the preceding claims, **characterised in that** the bolt (54) is assigned to a guided bolt holder (31) that can be moved between the bolted position and the released position.

8. Bearing device according to claim 7, **characterised in that** the bolt holder (31) is guided in a recess (32) of the guide part (12).

9. Bearing device according to one of the preceding claims, **characterised in that**, in the bolted position, the bolt (54) is in contact with a first stopper and, in the released position, is in contact with a second stopper.

10. Bearing device according to one of the preceding claims, **characterised in that** the bolt (54) is mounted to be translationally displaceable or rotatable.

11. Bearing device according to one of the preceding claims, **characterised in that** the bolt (54) is stressed by at least one spring (60) into the released position.

12. Bearing device according to one of the preceding claims, **characterised in that** the ejector (36) is mounted in a translationally or rotatably moveable manner.

13. Bearing device according to one of the preceding claims, **characterised in that** the ejector (36) is stressed by at least one spring (44) in an ejection direction.

14. Bearing device according to one of the preceding claims, **characterised in that** the retaining bar (11) has a cone structure at its end.

15. Bearing device according to claim 14, **characterised in that** the cone structure is assigned to an attachment part (51), which is formed in particular as a plastic part, and which is connected to the retaining bar (11).

## Revendications

1. Dispositif de support (10) pour un appui-tête, comprenant une partie de guidage (12) par l'intermédiaire de laquelle la tige de maintien (11) de l'appui-tête peut être installée sur un siège de véhicule et peut être fixée de façon détachable dans un état d'arrêt par rapport à la partie de guidage (12) au moyen d'un dispositif de verrouillage (15), dans lequel le dispositif de verrouillage (15) comprend un verrou (54) mobile entre une position de verrouillage et une position de libération, lequel verrou est associé à la partie de guidage (12) et présente au moins un évidement (55) qui est associé à la tige de maintien (11), **caractérisé en ce qu'**un dispositif d'actionnement (16) du dispositif de verrouillage (15) comprend une liaison de transmission de force sous la forme d'une bande (33), en particulier d'une bande (33) guidée à la manière d'un palan, de telle sorte que, lors d'un déplacement du dispositif d'actionnement, le verrou (54) puisse être déplacé dans la position de libération par une force d'actionnement résultante.

2. Dispositif de support selon l'une quelconque des revendications précédentes, **caractérisé en ce que** la bande (33) est en liaison avec un éjecteur (36) de la tige de maintien (11) guidé sur la partie de guidage (12), de telle sorte qu'une autre force d'actionnement résultante agisse sur l'éjecteur (36) et contraigne celui-ci d'une première position jusqu'à une seconde position.

3. Dispositif de support selon l'une quelconque des revendications précédentes, **caractérisé en ce que** la bande (33) comprend une région d'actionnement qui coopère avec une culée du verrou (54) de telle sorte que, lorsqu'une force de traction est exercée sur la bande (33), une force soit exercée sur la culée, déplaçant ainsi le verrou (54) en direction de la position de libération.

4. Dispositif de support selon l'une quelconque des revendications précédentes, **caractérisé en ce que**, dans la position de verrouillage, la bande (33) est déviée sur la butée depuis une première direction d'extension (y1, y2) jusqu'à une seconde direction d'extension (z1, z2).

5. Dispositif de support selon l'une quelconque des revendications précédentes, **caractérisé en ce que** la région d'actionnement est formée entre une première région d'extrémité (34) et une seconde région d'extrémité (35) de la bande (33).

6. Dispositif de support selon l'une quelconque des revendications précédentes, **caractérisé en ce qu'**une première région d'extrémité (34) de la bande (33) forme un actionneur motorisé ou manuel (63) et l'autre région d'extrémité (35) forme une fixation sur l'éjecteur (36).

7. Dispositif de support selon l'une quelconque des revendications précédentes, **caractérisé en ce que** le verrou (54) est associé à un support de verrou (31) qui est guidé de façon mobile entre la position de verrouillage et la position de libération.

8. Dispositif de support selon la revendication 7, **caractérisé en ce que** le support de verrou (31) est guidé à l'intérieur d'un évidement (32) de la partie de guidage (12).

9. Dispositif de support selon l'une quelconque des revendications précédentes, **caractérisé en ce que** le verrou (54) est en contact avec une première butée dans la position de verrouillage et avec une seconde butée dans la position de libération.

10. Dispositif de support selon l'une quelconque des revendications précédentes, **caractérisé en ce que** le verrou (54) est monté déplaçable en translation ou pivotable.

11. Dispositif de support selon l'une quelconque des revendications précédentes, **caractérisé en ce que** le verrou (54) est contraint par au moins un ressort (60) en direction de la position de verrouillage.

12. Dispositif de support selon l'une quelconque des revendications précédentes, **caractérisé en ce que** l'éjecteur (36) est supporté mobile en translation ou en rotation.

13. Dispositif de support selon l'une quelconque des revendications précédentes, **caractérisé en ce que** l'éjecteur (36) est sollicité par au moins un ressort (44) dans la direction d'éjection.

14. Dispositif de support selon l'une quelconque des revendications précédentes, **caractérisé en ce que** la tige de maintien (11) présente une structure conique à son extrémité.

15. Dispositif de support selon la revendication 14, **caractérisé en ce que** la structure conique est associée à une partie d'embout (51) qui se présente en particulier sous la forme d'une pièce en matière plastique et qui est reliée à la tige de maintien (11).
